# EUROPEAN PATENT APPLICATION

(11) **EP 4 394 295 A1**
(43) Date of publication of application: **03.07.2024**
(21) Application number: 22217322.1
(22) Date of filing: 30.12.2022
(51) Int. Cl.: F27B 1/00, F27B 1/08, F27D 17/00, F27D 99/00, C04B 2/08, C04B 2/12

(54) **PROCESS FOR CALCINING CARBONATED MINERAL STONES IN AN ANNULAR VERTICAL KILN AND IMPLEMENTED KILN**

(71) Applicant: S.A. LHOIST RECHERCHE ET DEVELOPPEMENT, 1342 Ottignies-Louvain-la-Neuve (BE)
(72) Inventor: HABIB, Ziad, 1630 Linkebeek (BE); VAN CANTFORT, Olivier, 1150 Woluwe-Saint-Pierre (BE); CLOAREC, Tristan, 64490 Urdos (FR)
(74) Representative: Calysta NV

(57) **Abstract**

Annular shaft kiln for calcining carbonated mineral stones, comprising an outer cylinder (1), and an inner cylinder (2), forming an annular space (3) with the outer cylinder (1), said kiln further comprising an external recirculation circuit which is arranged outside of the kiln between a removal duct (9) and lower gas injection means (7), and which comprises a separation body (28) for taking off a fraction of gaseous effluent from said removal duct (9), and separating means (13) which are able to divide in parts the taken off fraction of said gaseous effluent, at least one external furnace equipped with at least one plasma torch (14) for heating a gas and with, as lower gas injection means, at least one lower mixing chamber (15) wherein the heated gas is mixed with a control gas which has not been heated by the at least one torch, for providing a gaseous mixture having a controlled temperature equal or higher than the temperature of calcination of the loaded mineral stones, and gas outlet means (18) for extracting from the inner cylinder (2) a gaseous stream containing the heated cooling air and removing it outside the kiln.

## Description

The present invention relates to a process for calcining carbonated mineral stones in an annular shaft kiln (ASK), having an outer cylinder and an inner cylinder forming an annular space between them. Such a process is known and comprises
- a loading step of carbonated mineral stones at the top of the kiln,
- an injection of an upper hot gas into the annular space at a first level thereof,
- an injection of a lower hot gas into the annular space at a second level lower than the first level,
- a preheating step in a preheating zone of said loaded carbonated mineral stones flowing downwardly in the annular space,
- a calcining step of said preheated carbonated mineral stones in a calcination zone located in the annular space below the preheating zone, said preheating and calcining steps of said carbonated mineral stones flowing downwardly in the annular space taking place successively in contact with the upper and the lower gas which are at least partially submitted to an upwards draft in counter-current of the carbonated mineral stones and are exhausted from the top of the kiln under the form of a gaseous effluent,
- an introduction of cooling air at the bottom of the kiln,
- a cooling step in a cooling zone below the calcination zone of decarbonated calcined material flowing downwardly, with cooling air flowing in counter-current through said decarbonated calcined material and forming a heated cooling air,
- an aspiration step of said heated cooling air into the inner cylinder at a third level lower than said second level, under the form of a gaseous stream containing said heated cooling air, and
- a discharging step of the decarbonated calcined material from the bottom of the kiln.

According to the invention, carbonated mineral stones particularly mean calcareous stones (limestones), dolomitic stones (dolostones or unburnt dolomites) and/or magnesite stones which are calcined into quicklime, quick dolime and/or magnesia.

The calcination reaction of limestone into quicklime is :

CaCO₃ (solid) + heat ←→ CaO (solid)+ CO₂ (gas)

This reaction is endothermic and reversible. Below 900°C lime and CO₂ will recombine at the first opportunity. But from a temperature of the order of 900°C the starting stones give off a significative volume of CO₂ during their decarbonation. In order to obtain such a decarbonation, the temperature must consequently be significatively increased in the calcining zone. Today this increase is mainly obtained by combustion of a fuel, frequently fossil, in presence of an oxidizer as air. In turn this fuel combustion contributes also to an important release of CO₂. Globally the current calcination methods actively participate in increasing the greenhouse effect.

During the fuel combustion a direct contact of the flame with the preheated carbonated mineral stones also results in possible local overheat in the calcination zone and the possibility that the flue gas would contaminate the calcined material. A prior careful selection of the fuel is required to maintain a high quality of the calcined material, notably while avoiding high sulphur fuels. Even with selected fossil fuels, the calcined material reactivity will be affected by the fuel ash and some minor pollutants. During the combustion at high temperatures thermal NOx are also generated due to nitrogen possibly in the fuel but moreover at high contents in the combustion air.

This classical process has also the disadvantage to provide the fuel combustion with air and the cooling of the decarbonated calcined material with air. Therefrom it results a release at the top of the kiln of a gaseous effluent having a high content of diatomic nitrogen N₂ and a relatively low content of CO₂ (vol. concentration of the order of 25% to 35% on dry gas) which is difficult to capture due to a high presence of N₂ in the used air.

The object of the present invention is to remedy at least partially the problem of significant CO₂ emissions of ASK kilns, without modifying substantially their functioning and by making little or no changes to their structure, while allowing an easy capture of the released CO₂. Another object is to avoid as much as possible overheat of the calcined material and introduction of impurities in this material and in the gaseous effluent exiting from the kiln. The main object of the calcination kilns must obviously be maintained, i.e. the production of a calcined material of high quality and purity.

In order to solve these problems, according to the invention a method as above indicated further comprises
- a recirculating step outside the kiln of a fraction of the gaseous effluent exhausted from the top of the kiln,
- outside the kiln, a first heating step of a gas by means of at least one plasma torch for producing a lower heated gas, and a first step for mixing said lower heated gas with a control gas which is not heated by the at least one plasma torch, for controlling a temperature of a first gaseous mixture which is said lower hot gas injected into the kiln at the second level of the annular space, the controlled temperature allowing a calcining of the carbonated mineral stones, at least the lower heated gas or the control gas or both of them being comprised of said recirculated fraction of gaseous effluent,
- said upper hot gas being originated at least partly from the recirculated fraction of gaseous effluent and having a temperature allowing a preheating of the carbonated mineral stones, and
- a step for extracting from the inner cylinder of the kiln said gaseous stream containing the heated cooling air, and thereafter for removing it from the kiln,
the gaseous effluent exiting from the top of the kiln being concentrated in CO₂.

The invention relies mostly on externalizing the energy supply while heating a recirculated gas with a plasma torch, which is a fully electrical solution. The CO₂ of the part of recirculated gaseous effluent will be partially broken down at high temperature in an electric arc, but mostly recombined in the process. The heating is done with plasma torch(es), preferably using CO₂ as main gas in order to reuse the CO₂ from the calcination of the carbonated stones as main gas for the plasma torches. Alternatively, the plasma can be generated with air, steam, CO₂, N₂, noble gas and their mixtures.

No fuel and no air are still necessary for a combustion inside the kiln. Consequently, limited additional pollutant will be emitted apart the minor ones contained in the stones. No ash will be produced resulting to a pure decarbonated material. Due to the low level of nitrogen in the gas flows, little NOx will be produced enabling the plants to comply with more strict regulations. No more direct contact of the stones with a flame is to fear. The appropriate temperature of the heated gas from the plasma torch is controlled very easily by means of the step of mixing, leading to a high quality of calcined material.

By recirculating a CO₂ based gas and in absence of combustion air, the system will enrich in CO₂ the gaseous effluent exiting from the kiln. Moreover, as the heated cooling air is removed from the kiln separately from the gaseous effluent, there is no or little dilution of the recirculated gaseous effluent by air, making it easier to capture. The gaseous effluent removed from the kiln is formed almost exclusively of the gaseous stream resulting from the decarbonation and of the CO₂ based gas injected in the annular space of the kiln. Therefrom it results that the gaseous effluent exhausted from the kiln has a concentrated CO₂ content, typically of at least 70% by volume on dry gas, preferably of at least 80%, most preferably of at least 90% by volume on dry gas.

According to an embodiment of the present invention, the process comprises, outside the kiln, a second heating step of a gas by means of at least one plasma torch for producing an upper heated gas, and a second step for mixing said upper heated gas with an adjusting gas which is not heated by the at least one plasma torch, for adjusting a temperature of a second gaseous mixture which is said upper hot gas injected at the first level of the annular space, the adjusted temperature allowing a preheating of the carbonated mineral stones, at least the upper heated gas or the adjusting gas or both of them being comprised of said recirculated fraction of gaseous effluent.

According to another embodiment of the invention, the process comprises a mixing step of a portion of said first gaseous mixture having a controlled temperature with a part of said recirculated fraction of gaseous effluent which has not been heated by said at least one plasma torch, for adjusting the temperature of an additional mixture, which is injected, as said upper hot gas, at said first level of the kiln at said adjusted temperature allowing a preheating of the carbonated mineral stones.

According to an advantageous embodiment of the invention, the process comprises a heat exchange between a recirculated fraction of gaseous effluent and the gaseous stream containing said heated cooling air which is removed from the kiln, said heat exchange taking place upstream any heating step of a part of the recirculated fraction of gaseous effluent by means of at least one plasma torch.

According to a particular embodiment of the invention, said upper and lower hot gas which are drawn toward the top of the kiln form a gaseous stream which is partially recovered out of the kiln before the exhaust of the gaseous effluent to the stack at the top of the kiln, the process further comprising a heat exchange between this recovered gaseous stream and a part of said recirculated fraction of gaseous effluent before the step of heating of this part by means of at least one plasma torch.

According to an embodiment of the invention, said upwards draft and said aspiration step are so equilibrated that a first part of the lower hot CO₂ based gas injected into the annular space is upwards draft in counter-current of the stones to calcine and a second part of the lower hot CO₂ based gas is supplied downward the bottom of the annular space, in co-current with the mineral stones to calcine, and thereafter aspired inside the inner cylinder, while forming with said cooling air said gaseous stream containing said heated cooling air.

According to another embodiment of the invention, said upwards draft and said aspiration step are so equilibrated that the totality of the lower hot CO₂ based gas injected into the annular space is submitted to the upwards draft, the gaseous stream aspired in the inner cylinder comprising substantially cooling air.

The present invention concerns also an annular shaft kiln for calcining a carbonated mineral stones. Currently such a kiln comprises
- an outer cylinder,
- an inner cylinder, forming an annular space with the outer cylinder,
- material inlet means for feeding said carbonated mineral stones at the top of the kiln into the annular space,
- upper gas injection means at a first level of the annular space, provided for injecting an upper hot gas,
- lower gas injection means at a second level of the annular space lower than the level of the upper gas injection means, provided for injecting a lower hot gas,
- a cooling air inlet, provided at the bottom of the annular space for cooling a decarbonated calcined material,
- material discharge means at the bottom of the kiln for discharging the decarbonated calcined material out of the kiln,
- first gas outlet means at the top the kiln for exhausting a gaseous effluent into a removal duct, and
- return vents in the inner cylinder at a third level lower than said second level, through which a gaseous stream containing the cooling air heated in contact with the decarbonated calcined material is sucked from the annular space to the inner cylinder.

According to the invention such a kiln further comprises an external recirculation circuit which is arranged outside of the kiln between said removal duct and said lower gas injection means, said external recirculation circuit comprising
- a separation body for taking off a fraction of said gaseous effluent from said removal duct, and
- separating means which are able to divide in parts the taken off fraction of said gaseous effluent,
said kiln further comprising at least one external furnace equipped with at least one plasma torch for heating a gas and with, as lower gas injection means, at least one lower mixing chamber wherein the heated gas is mixed with a control gas which has not been heated by the at least one torch, for providing a gaseous mixture which is said lower hot gas to inject having a controlled temperature equal or higher than the temperature of calcination of the loaded mineral stones, at least the heated gas or the control gas or both of them being comprised of said recirculated fraction of gaseous effluent,
and
second gas outlet means for extracting from the inner cylinder said gaseous stream containing the heated cooling air and removing it outside the kiln.

According to an embodiment of the kiln of the invention, a first heat exchanger is provided between said separating means and said at least one lower mixing chamber for feeding this at least one mixing chamber with a second part of the recirculated fraction of gaseous effluent, said first heat exchanger being also connected to said second gas outlet means, through which said gaseous stream containing the heated cooling air is extracted, for allowing an heat exchange between said gaseous stream and said second part of the recirculated fraction of the gaseous effluent which has not been heated by at least one plasma torch.

According to an advantageous embodiment of the kiln, at least one upper mixing chamber which is connected to the at least one lower mixing chamber, to the separating means as well as to said upper gas injection means, a portion of said first gaseous mixture having a controlled temperature being mixed with a part of said recirculated fraction of gaseous effluent which has not been heated by said at least one plasma torch, for adjusting the temperature of an additional gaseous mixture which is injected by said upper injection means at said first level of the kiln at a temperature allowing a preheating of the carbonated mineral stones.

In a typical embodiment of the invention, there will be 4 to 6 external electrical furnaces and 4 to 6 lower mixing chambers.

According to a particular embodiment, the kiln of the invention at least one additional external furnace connected with said separating means and equipped with at least one plasma torch for heating a gas and with, as said upper gas injection means, at least one upper mixing chamber wherein said heated gas is mixed with an adjusting gas which has not been heated, for providing a supplementary gaseous mixture having an adjusted temperature, said supplementary gaseous mixture being injected by said upper injection means at said first level of the kiln at a temperature allowing a preheating of the carbonated mineral stones, at least the heated gas or the adjusting gas or both of them being comprised of said recirculated fraction of gaseous effluent.

In a typical embodiment of the invention, there will be 4 to 6 additional external electrical furnaces and 4 to 6 upper mixing chambers.

According to a preferential embodiment of the invention, the kiln comprises recovering means which are arranged in the kiln between said upper gas injection means at said first level and said first gas outlet means at the top the kiln, for partly recovering the gaseous effluent, and a second heat exchanger which is provided between said separating means and a mixing chamber for feeding this mixing chamber with a part of the fraction of gaseous effluent, said second heat exchanger being also connected to said recovering means, for allowing an heat exchange between said part of the fraction of gaseous effluent and said partly recovered gaseous effluent.

Other features and details of the method and kiln according to the invention are indicated in the appended claims. Other particularities of the invention will also result from the non-limiting description given below, with reference to the drawings.

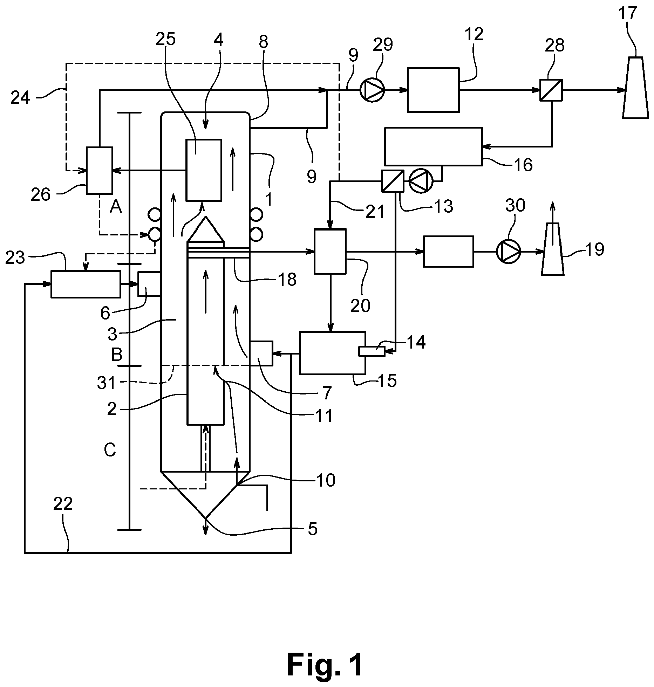

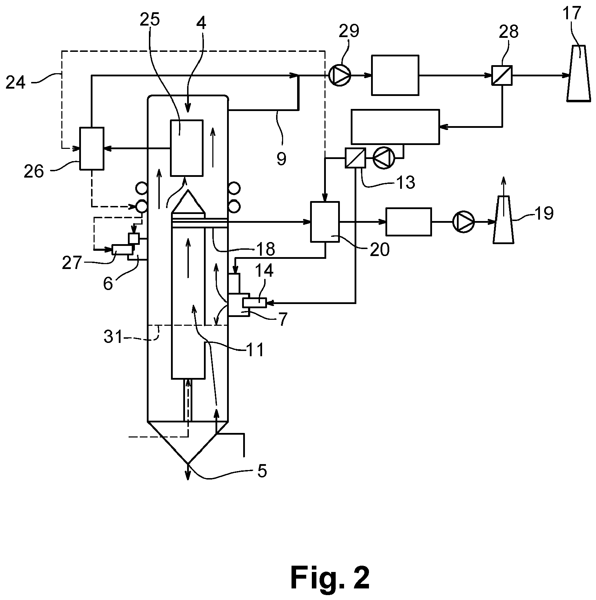

Figures 1 and 2 illustrate schematically two embodiments of a kiln according to the invention.

In the figures, identical or similar elements have the same references.

The kiln illustrated on Fig. 1 comprises an outer cylinder 1 and an inner cylinder 2 which form an annular space 3 wherein carbonated mineral stones descend by gravity. The stones are introduced at the top of the kiln at the material inlet 4 and a decarbonated calcined material is collected by the discharge 5.

Upper gas injection means under the form of injection chambers 6 are provided at a first level of the annular space for injecting into the annular space an upper hot gas, which flows toward the top of the kiln in counter-current of the stones in a preheating zone A wherein the stones are preheated by heat exchange at a temperature of 850 - 1000°C, typically around 925°C.

Lower gas injection means under the form of injection chambers 7 are provided at a second level of the annular space lower than the level of the chamber 6 for injecting a lower hot gas, which flows also toward the top of the kiln in counter-current of the stones in a calcining zone B wherein the stones are heated to a temperature sufficient for calcining the carbonated stones.

Hot gas is thus injected at two levels by means of several injection chambers 6 and 7 (4 to 6 chambers according the capacity of the kiln). Typically, about 1/3 of the hot gas is injected in the annular space by means of the injection chambers 6 and about 2/3 by means of the injection chambers 7.

In the kiln of Fig.1 the totality of the upper hot gas and of the lower hot gas are drawn by a fan 29 in countercurrent of the stones. They form of a gaseous effluent which is exhausted from the kiln by the upper outlet 8 provided at the top of the kiln, the removal duct 9, a treatment unit 12 and a stack 17. So the descending stones are preheated by heat exchange in the preheating zone A and calcined in a countercurrent calcination zone B. This feature is illustrated in the embodiment of Fig.1 but can also be applied in the embodiment of Fig. 2.

A cooling air inlet 10 is provided at the bottom of the annular space. The cooling air flows in counter-current of the decarbonated calcined material in a cooling zone C wherein it is so progressively heated.

In the inner cylinder 2, return vents 11 are arranged at a third level lower than the second level. Through these return vents a gaseous stream containing the cooling air heated in contact with the decarbonated calcined material is sucked from the annular space 3 to the inner cylinder 2. The kiln comprises also at least one gas outlet duct 18, as second gas outlet means, which is equipped with an aspiration fan 30 for extracting from the inner cylinder 2 the gaseous stream containing the heated cooling air and removing it outside the kiln toward a second stack 19.

In the kiln of Fig. 1 the upwards draft of the fan 29 and the aspiration of the fan 30 are so equilibrated that the totality of the lower hot gas injected into the annular space is submitted to the upwards draft, the equilibrium line being illustrated by the broken line 31. In the kiln illustrated on Fig.1 the gaseous stream removed by the stack 19 consists substantially of heated cooling air. This feature is illustrated in the embodiment of Fig.1 but can also be applied in the embodiment of Fig. 2. To implement this feature in retrofitting of existing classical ASK, either the position of the return vents 11 is moved upwards or the position of the lower injection or mixing chambers 7 is moved downwards.

An external recirculation circuit is arranged outside of the kiln between said removal duct 9 and the injection chambers 7. This external recirculation circuit comprises
- a separation body 12 for taking off a fraction of the gaseous effluent from the removal duct 9,
- separating means 13 which are able to divide in parts the taken off fraction of the gaseous effluent, and
- an external furnace.

This furnace is equipped with at least one plasma torch 14 connected with said separating means 13 for heating a first part of the taken off fraction of gaseous effluent and with a lower mixing chamber 15 connected, on one hand, to at least one plasma torch 14 and, on another hand, to the separating means 13 by means of the connection 21. In the mixing chamber 15 the first part of the fraction of gaseous effluent which has been heated by a plasma torch 14 is mixed with a second part of said fraction of gaseous effluent which has not been heated by a plasma torch and is originating from the separating means 13, for providing a gaseous mixture having a controlled temperature. The injection chambers 7 are connected with the mixing chamber 15 in order to inject into the annular space 3 the gaseous mixture which has this controlled temperature. At this level the mixture must have a temperature which is equal to or higher than the calcination temperature of the loaded stones.

The gaseous effluent exiting from the kiln into the removal duct has been cooled in contact with the loaded stones in the preheating zone and has at this moment a temperature of the order of 150-250°C. At the beginning of the recirculation circuit, the taken off fraction of the gaseous effluent may be treated by a gas treatment unit 16, for example for filtering and/or drying this gaseous fraction. At the outlet of this gas treatment unit 16 the taken off fraction has a temperature still lower, between the ambient temperature and 50°C. Consequently, in the electrical furnace the process consists in heating a cold CO₂ concentrated gas at a very high temperature by means of the at least one plasma torch 14 and thereafter, in mixing this very hot gas in a lower mixing chamber 15 with a cold gas having the same high CO₂ concentration in order to control a temperature allowing a calcination of the preheated stones, i.e. a gas temperature in the range of 1100 - 1600°C, in particular of 1200-1400°C.

In the kiln illustrated in Fig.1, a first heat exchanger 20 is provided on the connection 21 between the separating means 13 and the lower mixing chamber 15, said connection being provided for feeding this mixing chamber with said second part of the fraction of gaseous effluent. The first heat exchanger 20 is also arranged between the gas outlet duct 18, through which the gaseous stream containing the heated cooling air is extracted from the inner cylinder 2, and the stack 19. So there is an heat exchange between this gaseous stream which has a temperature in the range of 700- 1200°C, typically 1000°C and said cold second part of the taken off fraction of gaseous effluent which is not heated by a plasma torch.

The kiln illustrated on Fig. 1 further comprises a connection 22 between the lower mixing chamber 15 and an upper mixing chamber 23. Another connection 24 is provided between the separating means 13 and the mixing chamber 23. In this mixing chamber 23 a portion of the gaseous mixture of the lower mixing chamber 15 is so mixed with a third part of said recirculated fraction of gaseous effluent which has not been heated by at least one plasma torch while forming an additional gaseous mixture having an adjusted temperature. This additional mixture is introduced by the upper injection chambers 6 at a temperature allowing a preheating of the carbonated mineral stones.

In the embodiment illustrated on Fig.1, as recovering means, a recovering cylinder 25 is provided in the kiln between the injection chambers 6 at said first level and the gas outlet 8 at the top the kiln, for partly recovering the gaseous effluent. A second heat exchanger 26 is provided on the connection 24 between the separating means 13 and the mixing chamber 23 for feeding this mixing chamber with said third part of the fraction of gaseous effluent. The second heat exchanger 26 is also connected to the recovering cylinder 25, for allowing a heat exchange between the cold third part of the fraction of gaseous effluent and the partly recovered gaseous effluent.

In this embodiment of kiln according to the invention there is no more combustion of any fuel and consequently no use of air as oxidizer. The air used for cooling the calcined material is completely removed from the kiln in a separated manner by the stack 19 from which a gas consisting exclusively of air is removed. No or little air may dilute the effluent exhausted at the stack 17 which contains particularly CO₂ resulting from the decarbonation of the carbonated stones. This effluent is continuously partially recycled in the annular space by means of the injection chambers from which it results that the CO₂ concentration of the gaseous effluent removed at the stack 17 is very high, typically of more than 70 vol.%, preferably of more than 80 vol.%, most preferably of 90 vol.% on dry gas. A sequestration or exploitation of CO₂ is easy to conceive in these conditions. Moreover the increases of temperature are obtained by an electrically way up to extremely high levels in a constantly regulated manner.

The embodiment illustrated on Fig.2 is very similar to the embodiment of Fig.1. However here the lower injection chambers 7 take the role of mixing chamber and are each connected to (at least) a plasma torch 14 and to the separating means 13 for providing the hot gaseous mixture to inject at the second level. Here an additional external electrical furnace is equipped with plasma torches 27 for heating a part of the taken off fraction of gaseous effluent supplied by the connection 24 for each upper injection chamber 6, which take the role of mixing chamber, each being connected to a plasma torch 27. Therein the part of said fraction of gaseous effluent heated by the plasma torch is mixed with a part of said fraction of gaseous effluent which has not been heated, for providing a supplementary gaseous mixture having an adjusted temperature. Said supplementary gaseous mixture is also injected by said upper injection chambers 6 at the first level of the kiln at a temperature allowing a preheating of the carbonated mineral stones.

An adaptation of a classical ASK kiln to such a kiln according to the invention is very simple. Only a replacement or a retrofitting of the injection chambers provided with burners for injecting fumes into the annular space by injection chamber provided with plasma torch allowing the injection of a hot gaseous CO₂ based mixture is necessary with, outside the kiln, a recirculation circuit and a separated removing of the cooling air.

In the kiln of Fig.2 the upwards draft of the fan 29 and the aspiration of the fan 30 are so equilibrated that only a part of the lower hot CO₂ based gas injected into the annular space is submitted to the upwards draft. The other part is sucked downward the bottom of the kiln and thereafter aspired into the inner cylinder through the return vents 11. The equilibrium is illustrated by the broken line 31. In the kiln illustrated on Fig.2 there is thus a zone of calcination in cocurrent with the stones to calcine. The gaseous stream removed by the stack 19 consists of heated cooling air mixed with this downward sucked part of lower hot CO₂ based gas.

Obviously, the present invention is not limited to the disclosed embodiments and several modifications may be provided without being outside the scope of the appended claims.

## Claims

1. A process for calcining carbonated mineral stones in an annular vertical kiln having an outer cylinder and an inner cylinder forming an annular space, comprising:
- a loading step of carbonated mineral stones at the top of the kiln,
- an injection of an upper hot gas into the annular space at a first level thereof,
- an injection of a lower hot gas into the annular space at a second level lower than the first level,
- a preheating step in a preheating zone of said loaded carbonated mineral stones flowing downwardly in the annular space,
- a calcining step of said preheated carbonated mineral stones in a calcination zone located in the annular space below the preheating zone, said preheating and calcining steps of said carbonated mineral stones flowing downwardly in the annular space taking place successively in contact with the upper and the lower gas which are at least partially submitted to an upwards draft in counter-current of the carbonated mineral stones and are exhausted from the top of the kiln under the form of a gaseous effluent,
- an introduction of cooling air at the bottom of the kiln,
- a cooling step in a cooling zone below the calcination zone of decarbonated calcined material flowing downwardly, with cooling air flowing in counter-current through said decarbonated calcined material and forming a heated cooling air,
- an aspiration step of said heated cooling air into the inner cylinder at a third level lower than said second level, under the form of a gaseous stream containing said heated cooling air, and
- a discharging step of the decarbonated calcined material from the bottom of the kiln,
**characterized in that** said process further comprises
- a recirculating step outside the kiln of a fraction of the gaseous effluent exhausted from the top of the kiln,
- outside the kiln, a first heating step of a gas by means of at least one plasma torch for producing a lower heated gas, and a first step for mixing said lower heated gas with a control gas which is not heated by the at least one plasma torch, for controlling a temperature of a first gaseous mixture which is said lower hot gas injected into the kiln at the second level of the annular space, the controlled temperature allowing a calcining of the carbonated mineral stones, at least the lower heated gas or the control gas or both of them being comprised of said recirculated fraction of gaseous effluent,
- said upper hot gas being originated at least partly from the recirculated fraction of gaseous effluent and having a temperature allowing a preheating of the carbonated mineral stones, and
- a step for extracting from the inner cylinder of the kiln said gaseous stream containing the heated cooling air, and thereafter for removing it from the kiln,
the gaseous effluent exiting from the top of the kiln being concentrated in CO₂.

2. Process according to claim 1, comprising, outside the kiln, a second heating step of a gas by means of at least one plasma torch for producing an upper heated gas, and a second step for mixing said upper heated gas with an adjusting gas which is not heated by the at least one plasma torch, for adjusting a temperature of a second gaseous mixture which is said upper hot gas injected at the first level of the annular space, the adjusted temperature allowing a preheating of the carbonated mineral stones, at least the upper heated gas or the adjusting gas or both of them being comprised of said recirculated fraction of gaseous effluent.

3. Process according to claim 1, comprising a mixing step of a portion of said first gaseous mixture having a controlled temperature with a part of said recirculated fraction of gaseous effluent which has not been heated by said at least one plasma torch, for adjusting the temperature of an additional mixture, which is injected, as said upper hot gas, at said first level of the kiln at said adjusted temperature allowing a preheating of the carbonated mineral stones.

4. Process according to anyone of claims 1 to 3, comprising a heat exchange between a recirculated fraction of gaseous effluent and the gaseous stream containing said heated cooling air which is removed from the kiln, said heat exchange taking place upstream any heating step of a part of the recirculated fraction of gaseous effluent by means of at least one plasma torch.

5. Process according to claim 3 or 4, **characterized in that** said upper and lower hot gas which are drawn toward the top of the kiln form a gaseous stream which is partially recovered out of the kiln before the exhaust of the gaseous effluent to the stack at the top of the kiln and **in that** the process further comprises a heat exchange between this recovered gaseous stream and a part of said recirculated fraction of gaseous effluent before the step of heating of this part by means of at least one plasma torch.

6. Process according to anyone of claims 1 to 5, wherein said upwards draft and said aspiration step are so equilibrated that a first part of the lower hot gas injected into the annular space is upwards draft in counter-current of the stones to calcine and a second part of the lower hot gas is supplied downward the bottom of the annular space, in co-current with the mineral stones to calcine, and thereafter aspired inside the inner cylinder, while forming with said cooling air said gaseous stream containing said heated cooling air.

7. Process according to anyone of claims 1 to 6, wherein said upwards draft and said aspiration step are so equilibrated that the totality of the lower hot gas injected into the annular space is submitted to the upwards draft, the gaseous stream aspired in the inner cylinder comprising substantially cooling air.

8. Annular shaft kiln for calcining carbonated mineral stones, comprising
- an outer cylinder (1),
- an inner cylinder (2), forming an annular space (3) with the outer cylinder (1),
- material inlet means (4) for feeding said carbonated mineral stones at the top of the kiln into the annular space (3),
- upper gas injection means (6) at a first level of the annular space, provided for injecting an upper hot gas,
- lower gas injection means (7) at a second level of the annular space lower than the level of the upper gas injection means (6), provided for injecting a lower hot gas,
- a cooling air inlet (10), provided at the bottom of the annular space for cooling a decarbonated calcined material,
- material discharge means (5) at the bottom of the kiln for discharging the decarbonated calcined material out of the kiln,
- first gas outlet means (8) at the top the kiln for exhausting a gaseous effluent into a removal duct (9), and
- return vents (11) in the innercylinder (2) at a third level lower than said second level, through which a gaseous stream containing the cooling air heated in contact with the decarbonated calcined material is sucked from the annular space (3) to the inner cylinder (2),
**characterized in that** said kiln further comprises an external recirculation circuit which is arranged outside of the kiln between said removal duct (9) and said lower gas injection means (7), said external recirculation circuit comprising
- a separation body (28) for taking off a fraction of said gaseous effluent from said removal duct (9), and
- separating means (13) which are able to divide in parts the taken off fraction of said gaseous effluent,
said kiln further comprising at least one external furnace equipped with at least one plasma torch (14) for heating a gas and with, as lower gas injection means, at least one lower mixing chamber (15) wherein the heated gas is mixed with a control gas which has not been heated by the at least one torch, for providing a gaseous mixture which is said lower hot gas to inject having a controlled temperature equal or higher than the temperature of calcination of the loaded mineral stones, at least the heated gas or the control gas or both of them being comprised of said recirculated fraction of gaseous effluent,
and
second gas outlet means (18) for extracting from the inner cylinder (2) said gaseous stream containing the heated cooling air and removing it outside the kiln.

9. Annular shaft kiln according to claim 8, comprising a first heat exchanger (20) which is provided between said separating means (13) and said at least one lower mixing chamber (15) for feeding this at least one mixing chamber with a second part of the recirculated fraction of gaseous effluent, said first heat exchanger (20) being also connected to said second gas outlet means (18), through which said gaseous stream containing the heated cooling air is extracted, for allowing an heat exchange between said gaseous stream and said second part of the recirculated fraction of the gaseous effluent which has not been heated by at least one plasma torch.

10. Annular shaft kiln according to claim 8 or 9, comprising at least one upper mixing chamber (23) which is connected to the at least one lower mixing chamber (15), to the separating means (13) as well as to said upper gas injection means (6) and wherein a portion of said first gaseous mixture having a controlled temperature is mixed with a part of said recirculated fraction of gaseous effluent which has not been heated by said at least one plasma torch, for adjusting the temperature of an additional gaseous mixture which is injected by said upper injection means (6) at said first level of the kiln at a temperature allowing a preheating of the carbonated mineral stones.

11. Annular shaft kiln according to claim 8 or 9, comprising at least one additional external furnace connected with said separating means (13) and equipped with at least one plasma torch (27) for heating a gas and with, as said upper gas injection means, at least one upper mixing chamber (23) wherein said heated gas is mixed with an adjusting gas which has not been heated, for providing a supplementary gaseous mixture having an adjusted temperature, said supplementary gaseous mixture being injected by said upper injection means (6) at said first level of the kiln at a temperature allowing a preheating of the carbonated mineral stones, at least the heated gas or the adjusting gas or both of them being comprised of said recirculated fraction of gaseous effluent.

12. Annular shaft kiln according to anyone of claim 8 to 11, further comprising recovering means (25) which are arranged in the kiln between said upper gas injection means (6) at said first level and said first gas outlet means (8) at the top the kiln, for partly recovering the gaseous effluent, and a second heat exchanger (26) which is provided between said separating means (13) and a mixing chamber for feeding this mixing chamber with a part of the fraction of gaseous effluent, said second heat exchanger being also connected to said recovering means (25), for allowing an heat exchange between said part of the fraction of gaseous effluent and said partly recovered gaseous effluent.
